Europäisches Patentamt

European Patent Office

Office européen des brevets

(19)

(11) **EP 1 428 690 A1**

(12) # DEMANDE DE BREVET EUROPEEN

(43) Date de publication:
**16.06.2004 Bulletin 2004/25**

(51) Int Cl.$^7$: **B60C 15/00**

(21) Numéro de dépôt: **03027038.3**

(22) Date de dépôt: **24.11.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **11.12.2002 FR 0215879**

(71) Demandeurs:
• **Sociéte de Technologie Michelin**
  **63000 Clermont-Ferrand Cedex 09 (FR)**

• **Michelin Recherche et Technique S.A.**
  **1763 Granges-Paccot (CH)**

(72) Inventeur: **Potin, Yves**
  **F-63100 Clermont-Ferrand (FR)**

(74) Mandataire: **Diernaz, Christian**
  **M. F. P. Michelin,**
  **SGD/LG/PI-F35-Ladoux**
  **63040 Clermont-Ferrand Cedex 09 (FR)**

(54) **Bourrelet de pneumatique facilitant le montage**

(57)     Pneumatique comportant deux bourrelets (2) destinés à être en contact avec des sièges d'une jante de montage et deux flancs (1), ce pneumatique comprenant des premiers renforts (4) formant une armature de carcasse (3), chaque bourrelet comprenant une structure d'ancrage (20) de l'armature de carcasse (3) formée d'au moins un second renfort (7) orienté circonférentiellement coopérant avec une portion adjacente de l'armature de carcasse (3) par l'intermédiaire d'un matériau caoutchouteux d'ancrage (9) ayant un module d'élasticité à 10% de déformation au moins égal à 30 MPa, ce pneumatique étant caractérisé en ce qu'il comprend, au moins axialement sur un côté de la structure d'ancrage (20) de l'armature de carcasse (3), un mélange de caoutchouc dit "mélange de découplage" (11, 12), ce mélange de découplage ayant un module d'élasticité, à 10 % de déformation, inférieur à la moitié du module d'élasticité du mélange d'ancrage.

FIG. 1

EP 1 428 690 A1

Printed by Jouve, 75001 PARIS (FR)

**Description**

La présente invention concerne les pneumatiques pour véhicules de tourisme et plus particulièrement la structure des bourrelets de ces pneumatiques. Dans la publication WO 98/54006 il a été proposé un pneumatique comportant un nouveau type d'ancrage de son armature de carcasse dans ses bourrelets. Selon ce document, ce pneumatique comporte un sommet renforcé par une armature de sommet, deux bourrelets et deux flancs reliant le sommet aux bourrelets. Ce pneumatique comporte une armature de carcasse avec des premiers renforts disposés de façon adjacente dans la direction circonférentielle, chacun desdits premiers renforts faisant dans les flancs un angle nul ou faible avec la direction méridienne depuis chaque bourrelet jusqu'au sommet. Cette armature de carcasse est ancrée dans chaque bourrelet à une structure d'ancrage comprenant au moins un second renfort orienté circonférentiellement et coopérant avec une portion adjacente de l'armature de carcasse par l'intermédiaire d'un mélange caoutchouteux d'ancrage. Ce mélange caoutchouteux d'ancrage est tel que son module d'élasticité pour une déformation de 10 % est supérieur à 20 MPa et de préférence supérieur à 30 MPa.

Cette nouvelle structure des bourrelets de pneumatique donne d'excellents résultats notamment en endurance, c'est-à-dire une bonne résistance dans le temps aux sollicitations mécaniques. On a cependant constaté que la rigidité élevée de ces bourrelets, due, entre autres, à la présence du second renfort et du mélange d'ancrage de module d'élasticité élevé et supérieur à 20 MPa, pouvait être la cause de difficultés de montage et/ou de démontage d'un pneumatique de sa roue de montage, notamment lors de montages et/ou démontages manuels. Ce problème est particulièrement sensible pour des pneumatiques destinés à des véhicules de tourisme, ces pneumatiques ayant des hauteurs de section petites et comprenant des structures d'ancrage très rigides. Par hauteur de section d'un pneumatique mesurée lorsque celui-ci est monté sur sa jante de montage, on entend la hauteur de ladite section du pneumatique vu en coupe méridienne (c'est-à-dire dans un plan axial contenant l'axe de rotation) et mesurée entre le siège de jante de montage et la partie radialement la plus à l'extérieur du sommet du pneumatique. Par hauteur de section relativement faible, on entend dans le présent document une hauteur de section inférieure à 86 mm.

Ce problème est encore plus prononcé dès lors que la jante de montage comprend un siège de jante prolongé axialement vers l'intérieur par une saillie de faible hauteur (encore appelée "hump") destinée à maintenir le bourrelet du pneumatique sur son siège en cas de dégonflage partiel ou total du pneumatique. La présence de cette saillie ou hump pose de réelles difficultés lors du montage d'un pneumatique tel que décrit plus haut, ces difficultés pouvant en outre conduire à une mise en place incorrecte des bourrelets sur les sièges de jante.

La présente invention a pour objectif de résoudre ce problème.

Dans ce qui suit, on entend par :

- « renfort », aussi bien des mono filaments que des multi-filaments, ou des assemblages comme des câbles, des retors ou bien encore n'importe quel type d'assemblage équivalent, et ceci, quels que soient la matière et le traitement de ces renforts, par exemple traitement de surface ou enrobage ou pré encollage pour favoriser l'adhésion avec le caoutchouc ;

- « contact » entre un renfort et un mélange caoutchouteux, le fait qu'au moins une partie de la circonférence extérieure du renfort est en contact avec le mélange caoutchouteux ; si le renfort comporte un revêtement ou un enrobage, le terme contact signifie alors que la circonférence extérieure de ce revêtement ou de cet enrobage est en contact avec le mélange caoutchouteux ;

- « axiale », une direction parallèle à l'axe de rotation du pneumatique ; cette direction peut être orientée « axialement vers l'intérieur » lorsqu'elle est orientée vers l'intérieur du pneumatique et « axialement vers l'extérieur » lorsqu'elle est orientée vers l'extérieur du pneumatique ;

- « radiale », une direction passant par et perpendiculaire à l'axe de rotation du pneumatique ; cette direction est dite orientée « radialement vers l'intérieur » lorsqu'elle est orientée vers l'axe de rotation du pneumatique ou « radialement vers l'extérieur » lorsqu'elle est orientée dans le sens opposé c'est-à-dire vers l'extérieur du pneumatique ;

- « module d'élasticité » d'un mélange caoutchouteux, un module sécant d'extension à 10 % de déformation et à température ambiante, la mesure est réalisée après un premier cycle d'accommodation jusqu'à 10 % de déformation :

$$E_{10} = \frac{F_{10}}{S \times \varepsilon_{10}}$$

avec :

$E_{10}$ : module d'extension sécant à 10% de déformation ;

$F_{10}$ : force d'extension à 10% d'extension ;

$S$ : section de l'éprouvette de test à la déformation d'extension $\varepsilon_{10}$, dans le cas de matériau caoutchoutique, il est connu que : $S =$

$\dfrac{S_0}{1 + \varepsilon_{10}}$ avec $S_0$ représentant la section initiale de l'éprouvette de test ;

- « renfort orienté circonférentiellement », un renfort orienté sensiblement parallèlement à la direction circonférentielle du pneumatique, c'est-à-dire faisant avec cette direction un angle ne s'écartant pas de plus de cinq degrés de la direction circonférentielle ; et

- « un renfort orienté radialement ou encore dans la direction méridienne », un renfort faisant un angle au moins égal à 80° avec la direction circonférentielle ; ce renfort peut être contenu sensiblement dans un même plan axial (c'est-à-dire un plan contenant l'axe de rotation du pneumatique) ou dans un plan faisant avec un plan axial un angle inférieur ou égal à 10 degrés.

Un pneumatique selon l'invention comporte un sommet renforcé par une armature dite armature de sommet, deux bourrelets destinés à être en contact avec des sièges d'une jante de montage et deux flancs, chaque flanc reliant ledit sommet à un bourrelet. Ce pneumatique comprend des premiers renforts formant une armature de carcasse du pneumatique.

Pour assurer son maintien dans les bourrelets lorsque le pneumatique est gonflé, cette armature de carcasse est ancrée dans chaque bourrelet à une structure d'ancrage comprenant au moins un second renfort orienté circonférentiellement coopérant avec une portion adjacente de l'armature de carcasse par l'intermédiaire d'un matériau d'ancrage. Ce matériau d'ancrage ou de liaison est un mélange caoutchouteux à base d'élastomère et est en contact à la fois avec les premiers renforts de l'armature de carcasse et les seconds renforts de la structure d'ancrage directement adjacents aux premiers renforts.

Le matériau d'ancrage a un module d'élasticité pour une déformation de 10 % au moins égal à 30 MPa et a une résistance au fluage sous tension appropriée pour résister aux différents efforts auxquels est soumis le pneumatique selon l'invention.

Ce pneumatique est caractérisé en ce qu'il comprend, axialement de part et d'autre de la structure d'ancrage de l'armature de carcasse, un mélange de caoutchouc dit "mélange de découplage", ce mélange de découplage ayant un module d'élasticité, à 10 % de déformation, inférieur à la moitié du module d'élasticité du mélange d'ancrage.

Préférentiellement, le module du mélange de découplage est au plus égal à 20 MPa.

Chaque bourrelet peut, en outre, comprendre un profilé en mélange de caoutchouc formant l'extérieur dudit bourrelet, ce profilé, dit "profilé de protection" et destiné à venir en contact avec une jante de montage du pneumatique, ayant un module d'élasticité pour une déformation de 10 % au plus égal à 10 MPa. Ce même profilé recouvre axialement et radialement vers l'intérieur ledit bourrelet pour former entre autre la partie dite "pointe de bourrelet".

Avantageusement, une partie du profilé en mélange de découplage est placé axialement entre le profilé de protection et la structure d'ancrage.

Les premiers renforts peuvent être disposés de façon adjacente dans la direction circonférentielle en au moins un alignement circonférentiel depuis au moins l'un desdits bourrelets jusque l'un desdits flancs. De préférence, les premiers renforts forment des allers et retours disposés de façon adjacente, avec, dans ledit bourrelet, des boucles reliant chaque fois un aller à un retour. Ces premiers renforts peuvent être orientés sensiblement radialement.

On peut également réaliser les premiers renforts en groupant ceux-ci sous la forme de bandelettes et en posant ces bandelettes les unes après les autres pour former l'armature de carcasse.

D'autres caractéristiques et avantages de l'invention ressortent de la description faite ci-après en référence aux figures annexées qui montrent, à titre d'exemples non limitatifs, deux variantes de réalisation de l'objet de l'invention :

- la figure 1 est une vue selon un plan de coupe transversal montrant partiellement un flanc et un bourrelet d'un pneumatique selon l'invention et comprenant une structure d'ancrage à trois enroulements circonférentiels ;

- la figure 2 montre une coupe transversale partielle d'un bourrelet d'un pneumatique selon l'invention ayant une structure d'ancrage à un unique enroulement circonférentiel.

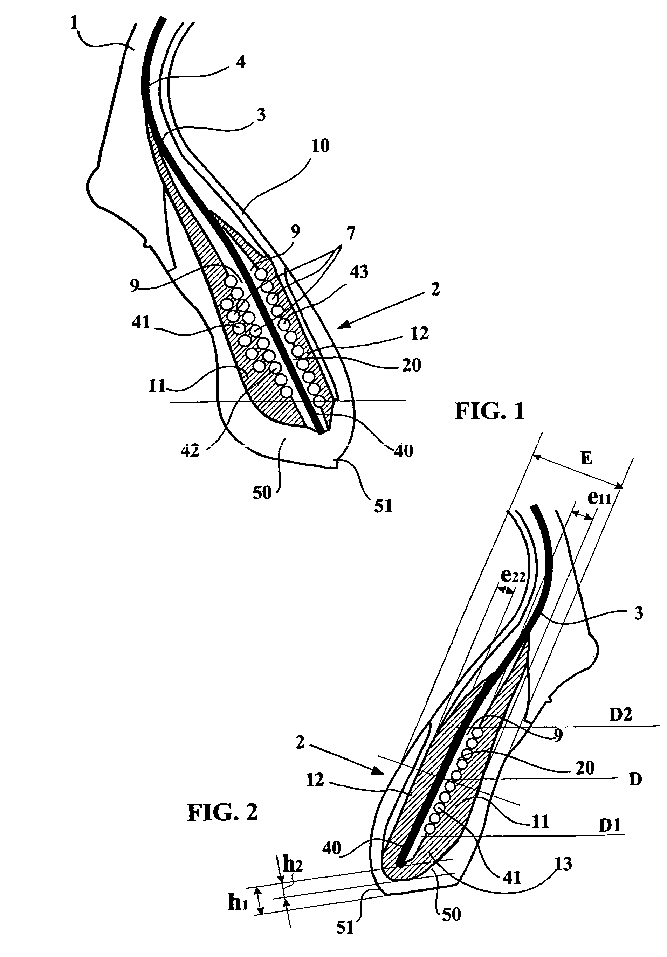

A la figure 1 une vue partielle d'un pneumatique selon l'invention est présentée dans un plan de coupe transversal (ou méridien), c'est-à-dire un plan contenant l'axe de rotation dudit pneumatique. Ce pneumatique comprend un flanc 1 adjacent à un bourrelet 2. Une armature de carcasse 3 s'étend circonférentiellement du bourrelet 2 vers le flanc 1 et comporte dans l'exemple présenté un alignement circonférentiel de premiers renforts 4. Les premiers renforts 4 sont orientés dans la direction méridienne (c'est-à-dire formant un angle égal ou proche de 90° avec la direction circonférentielle perpendiculaire au plan de la figure) dans les bourrelets et présentent des parties d'extrémité 40.

Le bourrelet comprend un profilé de protection 50 axialement à l'extérieur du bourrelet et se prolongeant radialement à l'intérieur dudit bourrelet ; ce profilé de protection 50 est destiné à assurer le contact du bourrelet avec une jante de montage du pneumatique. Par ailleurs, ce profilé de protection 50 est prolongé axialement à l'intérieur et radialement vers l'extérieur pour former au moins en partie l'extrémité radialement et axialement à l'intérieur du bourrelet dite "pointe de bourrelet" 51.

Dans chaque bourrelet, les premiers renforts 4 sont ancrés par leurs extrémités 40 à une structure d'ancrage 20 comprenant deux éléments principaux, à savoir des seconds renforts circonférentiels 7 et un mélange de caoutchouc d'ancrage 9 de caractéristiques mécaniques appropriées.

Dans la variante montrée à la figure 1, les seconds renforts circonférentiels 7 sont disposés à raison de deux enroulements circonférentiels 41 et 42 de seconds renforts 7 axialement à l'extérieur des extrémités 40 et d'un troisième enroulement circonférentiel 43 de seconds renforts 7 disposés axialement à l'intérieur des extrémités 40. Les seconds renforts 42 et 43 directement adjacents aux extrémités 40 des premiers renforts 4 coopèrent mécaniquement avec lesdits premiers renforts 4 par l'intermédiaire d'un mélange caoutchouteux d'ancrage 9. Ce mélange d'ancrage 9 est disposé axialement à l'intérieur et à l'extérieur des extrémités 40 des premiers renforts 4, entre ces extrémités et les enroulements circonférentiels 42 et 43 de seconds renforts 7 directement adjacents auxdites extrémités 40.

Ce contact direct entre le mélange caoutchouteux d'ancrage 9 et les premiers 4 et seconds 7 renforts dans la zone d'ancrage 20 est essentiel pour réaliser un ancrage efficace des premiers renforts 4 dans la structure d'ancrage (un ancrage efficace signifie que la reprise des efforts subis par les premiers renforts 4 - dus notamment à la pression de gonflage du pneumatique - par les seconds renforts 7 se fait sans créer de contraintes trop élevées à la fois dans ces renforts et dans le mélange d'ancrage).

Le mélange caoutchouteux d'ancrage 9 a comme caractéristiques mécaniques essentielles :

- une rigidité telle que son module d'extension à 10 % de déformation est ici supérieur à 50 MPa,

- une excellente résistance au fluage à haute température

- une très bonne stabilité à haute température.

Les seconds renforts 7 sont sensiblement inextensibles et peuvent être, par exemple, des câbles métalliques. Les premiers renforts 4 sont dans le cas présenté des renforts textiles de haut module d'élasticité (renforts aramides).

Axialement à l'intérieur du flanc du pneumatique, on trouve un mélange caoutchouteux 10 usuel appelé "mélange intérieur" dont la fonction est d'assurer une étanchéité satisfaisante vis-à-vis de l'atmosphère de gonflage du pneumatique ; ce mélange intérieur 10 est prolongé sensiblement au niveau de l'extrémité radialement à l'intérieur de l'enroulement axialement le plus à l'intérieur et est lui même partiellement recouvert axialement à l'intérieur par le mélange de protection 50 formant la pointe bourrelet 51.

Afin de faciliter le montage du bourrelet sur une jante de montage et d'assurer une bonne mise en place, la structure d'ancrage 20 est disposée entre deux profilés de découplage 11 et 12 s'étendant de la partie radialement la plus à l'intérieur de l'extrémité 40 et jusque radialement au delà des extrémités radialement les plus à l'extérieur des enroulements de la structure d'ancrage.

Ces deux profilés de découplage 11 et 12 sont en mélange de caoutchouc ayant un module d'élasticité à 10 % de déformation voisin de 15 MPa.

Le même mélange caoutchouteux constituant le profilé de découplage 11 enrobe également les renforts de l'enroulement circonférentiel 41 axialement le plus à l'extérieur et assure la liaison mécanique entre cet enroulement 41 axialement le plus à l'extérieur et l'enroulement 42 qui lui est adjacent.

La présence de ces deux profilés de mélange de caoutchouc de découplage 11 et 12 axialement de part et d'autre de la structure d'ancrage 20 de carcasse apporte de façon étonnante une réponse au problème posé par le montage de ce type de pneumatique sur une jante comportant au voisinage d'au moins un de ses sièges une saillie de faible hauteur ("hump") destinée à empêcher le déplacement axial du bourrelet par rapport à la jante en cas de perte partielle ou totale de pression de gonflage.

Dans une autre variante non représentée, la structure d'ancrage est formée de deux enroulements adjacents de part et d'autre de l'extrémité de l'armature de carcasse.

La seconde variante présentée avec le support de la figure 2 se distingue de la première variante de la figure 1 en ce que :

- la structure d'ancrage 20 ne comprend qu'un enroulement unique de seconds renforts circonférentiels 41 disposé axialement à l'extérieur de l'extrémité 40 de l'armature de carcasse 3, le couplage mécanique entre ledit enroulement 41 et l'armature de carcasse 3 se faisant grâce à un mélange d'ancrage 9 de module d'élasticité supérieur à 30 MPa ;

- cette structure d'ancrage 20 est enveloppée dans un profilé de mélange de découplage 13 ayant la forme d'un U et s'étendant axialement de part et d'autre de ladite structure pour former deux branches 11 et 12, lesdites deux branches étant elles mêmes réunies radialement à l'intérieur.

Les renforts circonférentiels composant l'enroulement unique coopèrent de manière avantageuse d'une part, d'un premier côté, avec le mélange d'ancrage, et d'autre part, du second côté, avec le mélange de découplage sans qu'il y ait réduction de l'efficacité mécanique de la structure d'ancrage.

Préférentiellement, la somme des épaisseurs moyennes des profilés de découplage 11 et 12, respectivement e11 et e22 est au moins égale à la moitié de l'épaisseur totale E du bourrelet.

Par épaisseur moyenne d'un profilé de découplage, on entend l'épaisseur moyenne mesurée perpendiculairement à l'armature de carcasse sensiblement à mi hauteur de la structure d'ancrage 20 (cette position est repérée sur la figure 2 par un segment de droite D parallèle à l'axe de rotation du pneumatique et tracé à mi distance des deux segments D1 et D2 passant respectivement par les points de l'armature d'ancrage les plus à l'intérieur radialement et les plus à l'extérieur radialement. L'épaisseur de bourrelet est mesurée au même niveau selon la même direction.

Avantageusement lorsque le profilé de découplage a la forme d'un U et est situé de part et d'autre de l'extrémité 40 de l'armature de carcasse, l'épaisseur h2 dudit profilé radialement à l'intérieur de ladite extrémité est au moins égale à la moitié de l'épaisseur totale h1 du bourrelet (mesurée comme l'épaisseur totale entre ladite extrémité et le siège du bourrelet).

Dans une autre variante également non représentée, l'armature d'ancrage à au moins un enroulement est localisée axialement à l'intérieur de l'extrémité 40 de l'armature de carcasse.

Les exemples qui viennent d'être décrits avec le support des figures 1 et 2, peuvent présenter divers modes de réalisation, notamment en ce qui concerne l'armature de carcasse : par exemple, il est possible d'utiliser un fil continu pour former cette armature de carcasse, les extrémités 40 étant alors sous forme de boucles dans le bourrelet, ou encore des fils individuels posés successivement ou des bandelettes réunissant plusieurs fils.

A titre non limitatif, il est à noter que la confection des pneumatiques selon l'invention peut avantageusement être réalisée selon un procédé n'impliquant pas ou peu de changement de formes à l'état cru. Par exemple, on peut assembler l'ébauche du futur pneumatique sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Cette confection peut notamment utiliser les dispositifs décrits dans le brevet EP 0243851 pour la pose des renforts du renfort de carcasse et EP 0264600 pour la pose des gommes caoutchouteux. Le pneumatique peut alors être moulé et vulcanisé comme exposé dans le brevet US 4895692.

**Revendications**

1. Pneumatique comportant un sommet renforcé par une armature de sommet, deux bourrelets (2) destinés à être en contact avec des sièges d'une jante de montage et deux flancs (1), chaque flanc reliant ledit sommet à un bourrelet, ce pneumatique comprenant des premiers renforts (4) formant une armature de carcasse (3), chaque bourrelet comprenant une structure d'ancrage (20) de l'armature de carcasse (3) formée d'au moins un second renfort (7) orienté circonférentiellement coopérant avec une portion adjacente de l'armature de carcasse (3) par l'intermédiaire d'un matériau caoutchouteux d'ancrage (9) ayant un module d'élasticité à 10% de déformation au moins égal à 30 MPa, ce pneumatique étant **caractérisé en ce qu'**il comprend, axialement de part et d'autre de la structure d'ancrage (20) de l'armature de carcasse (3), un mélange de caoutchouc dit "mélange de découplage" (11, 12), ce mélange de découplage ayant un module d'élasticité, à 10 % de déformation, inférieur à la moitié du module d'élasticité du mélange d'ancrage.

2. Pneumatique selon la revendication 1 **caractérisé en ce que** chaque bourrelet (2) comprend en outre un profilé (50) en mélange de caoutchouc formant l'extérieur dudit bourrelet, ce profilé (50), dit "profilé de protection" et destiné à venir en contact avec une jante de montage du pneumatique, ayant un module d'élasticité pour une déformation de 10 % au plus égal à 10 MPa, le mélange de découplage étant situé entre le profilé de protection et la structure d'ancrage (20).

3. Pneumatique selon la revendication 1 ou la revendication 2 **caractérisé en ce que** le module du mélange de découplage est au plus égal à 20 MPa.

4. Pneumatique selon l'une des revendications 1 à 3 **caractérisé en ce que** les premiers renforts (4) sont disposés de façon adjacente dans la direction circonférentielle en au moins un alignement circonférentiel depuis au moins l'un desdits bourrelets jusque l'un desdits flancs pour former une armature de carcasse du pneumatique, les renforts de cette armature étant orientés sensiblement radialement.

5. Pneumatique selon l'une des revendications 1 à 4 **caractérisé en ce que** la somme des épaisseurs moyenne des profilés de découplage 11, 12 est au moins égale à la moitié de l'épaisseur du bourrelet mesurée à mi hauteur de la structure d'ancrage.

6. Pneumatique selon l'une des revendications 1 à 5 **caractérisé en ce que** pour au moins un enroulement de renforts circonférentiels, lesdits renforts coopèrent d'une part, d'un premier côté, avec le mélange d'ancrage, et d'autre part, du second côté, avec le mélange de découplage.

**FIG. 1**

**FIG. 2**

**Office européen des brevets**

**RAPPORT DE RECHERCHE EUROPEENNE**

Numéro de la demande

EP 03 02 7038

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 869 017 A (MICHELIN & CIE) 7 octobre 1998 (1998-10-07) * colonne 6, ligne 16 - colonne 7, ligne 11; revendications 1,2,4,13,15; figures 3,4 * ----- | 1-6 | B60C15/00 |
| X | WO 02/30690 A (MICHELIN RECH TECH ;MICHELIN SOC TECH (FR); WILLARD WALTER L JR (U) 18 avril 2002 (2002-04-18) * page 6, ligne 7 - page 7, ligne 5; figure 1 * ----- | 1-4 | |

DOMAINES TECHNIQUES RECHERCHES (Int.Cl.7)

B60C

Le présent rapport a été établi pour toutes les revendications

| Lieu de la recherche | Date d'achèvement de la recherche | Examinateur |
|---|---|---|
| Munich | 18 mars 2004 | Vessière, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 03 02 7038

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-03-2004

| Document brevet cité au rapport de recherche | | Date de publication | Membre(s) de la famille de brevet(s) | | Date de publication |
|---|---|---|---|---|---|
| EP 0869017 | A | 07-10-1998 | BR | 9801215 A | 01-06-1999 |
| | | | CN | 1194904 A ,B | 07-10-1998 |
| | | | EP | 0869017 A1 | 07-10-1998 |
| | | | JP | 10309907 A | 24-11-1998 |
| | | | US | 6179029 B1 | 30-01-2001 |
| | | | US | 6626221 B1 | 30-09-2003 |
| WO 0230690 | A | 18-04-2002 | AU | 1903402 A | 22-04-2002 |
| | | | WO | 0230690 A1 | 18-04-2002 |

EPO FORM P0460

Pour tout renseignement concernant cette annexe : voir Journal Officiel de l'Office européen des brevets, No.12/82